Europäisches Patentamt

European Patent Office

Office européen des brevets

(11) Publication number: **0 503 105 A1**

# EUROPEAN PATENT APPLICATION

(21) Application number: **91103571.5**

(22) Date of filing: **08.03.91**

(51) Int. Cl.5: **G11B 15/18, G11B 15/48**

(43) Date of publication of application:
**16.09.92 Bulletin 92/38**

(84) Designated Contracting States:
**AT BE CH DE ES FR GB GR IT LI NL SE**

(71) Applicant: **Lin, Lung-Ching**
**No. 53, I Yung Road**
**Kaohsiung City(TW)**

(72) Inventor: **Lin, Lung-Ching**
**No. 53, I Yung Road**
**Kaohsiung City(TW)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Automatic three-stage tape winding speed controller.

(57) A three-stage tape winding speed controller to be applied in a cassette recorder, a video cassette recorder or a video cassette rewinder, comprising a power supply circuit (1), a motor speed and clockwise and counterclockwise rotation control circuit (2), a pulse adjusting and phase inverting circuit (3), a voltage changer (4), an SCR-style control circuit (5), a starting slow speed control circuit (6) and a signal picker (7), controlling the starting speed of a motor for driving a tape winding wheel to be slow for a pre-set period of time, to be very fast after that pre-set period of time to wind the tape very fast and then to be changed slow again just before finishing winding the tape till it is stopped.

Fig.1

## Background Of The Invention

The winding speed of a tape in a cassette recorder, a video cassette recorder or a video tape rewindwer is planned at a certain definite unchanged value, limited by various elements such as various length of tapes, constantly changing proportion of the tape length wound on the two winding wheels, constantly changing proportion of the speed of the two winding wheels. And a tape has to be prevented from breaking or harming probably caused at the istant it is started or stopped so the winding cannot be very fast to save time in rewindig or forward non-play winding.

## Summary Of The Invention

In view of the reason just described above, this invention has aimed to supply a three-stage tape winding speed controller for controlling the speed of a motor driving a winding wheel with three-stage change in order to rewind or wind non-playingly a tape with faster speed than that used in a conventional cassette reorder, a video cassette recorder or a video tape rewinder, and without breaking or harming a tape during the process of starting or stopping winding a tape.

The three-stage tape winding speed controller in the present invention comprises a power supply circuit, a motor speed and clockwise and counterclockwise rotation control circuit, a pulse adjusting and phase inverting circuit, a voltage changer, an SCR-style control circuit, a starting slow speed control circuit and a signal picker as the main components.

The power supply circuit furnishes this controller with direct current.

The motor speed and clockwise and counterclockwise rotation control circuit comprises a control switch for clockwise and counterclockwise rotation, two signal lamps to show clockwise or counterclockwise rotation and a motor.

The pulse adjusting and phase inverting circuit produces an oscillated pulse to be added to the signal received from the signal picker and then inverts the mixed signal into a high voltage signal, which is to be fed to the voltage changer.

The voltage changer has a preset or adjustable signal value with the signal coming from the pulse adjusting and phase inverting circuit, actuating to trigger the SCR-style control circuit, which then functions to change the contact point of a felay to reduce the high ampere current to the motor into a low current such that the motor rotates with a low speed until it stops.

The SCR-style control circuit has a slow speed during-fast-speed rotation circuit to be triggered by the pre-set output value of the voltage changer to slow down the motor speed just before finishing winding a tape until the winding is finished.

The starting slow speed control circuit has a pre-set signal value and to start winding a tape for a pre-set period of time by a start command, actuating the relay to change its contact point for leading the current to the motor to flow through and to ge reduced by a resistor to allow the motor to rotate at a slow speed for the pre-set period of time, and the motor begins to rotate very fast after the pre-set period of time has passed.

The signal picker using an electro-magnetic switch, a photo diode or a photo transistor constantly detects the wound length of the tape on one winding wheel not driven by the motor or the proportion of the wound lengths of the tape on the two winding wheels and sends the detected signal to the pulse adjusting and phase inverting circuit to be treated as described above.

## Brief Description Of The Drawings

Figure 1 is a block diagram of the automatic three-stage tape winding speed controller in the present invention.

Figure 2 is a circuit diagram of the automatic three-stage tape winding speed controller in the present invention.

Figure 3 is an actional curve on a gragh of the automatic three-stage tape winding speed controller in the present invention.

## Detailed Description Of The Invention

The automatic three-stage tape winding speed controller in the present invention comprises a power supply circuit 1, a motor speed and clockwise and counterclockwise rotation control circuit 2, a pulse adjusting and phase inverting circuit 3, a voltage changer 4, an SCR-style control circuit 5, a starting slow speed control circuit 6 and a signal picker 7 as its main components.

The power supply circuit 1 supplys this controller with direct current. The motor speed and clockwise and counterclockwise rotation control circuit 2 has a clockwise and counterclockwise rotation control switch 21, a clockwise and a counterclockwise rotation signal lamp 22, and a motor 23. But a single rotation signal lamp 22 can be used if this control circuit 2 is applied to a winding mechanism of one-way rotation. The rotating speed of the motor 23 is controlled by the current or the voltage of the electricity supplied to it.

The pulse adjusting and phase inverting circuit 3 produces an oscillating pulse to be added to the signal received from the signal picker 7 and inverts the signal mixed to send out a large voltage output to the voltage changer 4.

The SCR-style control circuit 5 comprises a slow speed during-fast-speed rotation circuit to be actuated by the pre-set value of the signal of the output from the voltage changer 4 and changing the contact point of a relay 50 to let the current to the motor 23 to flow through and to be reduced by a resistor 9 so that the motor 23 may rotate at a low speed until it stops. The resistor 9 can be one of a definite value or adjustable.

The starting slow speed control circuit 6 operates by a starting command to change the contact point of the relay 50 depending on a pre-set value of signal such that the current to the motor 23 can be reduced by the resistor R9 for the pre-set period of time so that the motor 23 may rotate at a slow speed for the pre-set period of time, and then when the pre-set period of time has passed the relay 50 is changed in its contact point, letting the current to the motor 23 not flow through the resistor R9 so that the motor 23 can rotate at a fast speed.

The signal picker 7, one or two, has a function to detect constantly the wound length of a tape on the winding wheel not driven by the motor 23 or the proportion of the wound lengths of a tape on the two winding wheels, sending a signal to the pulse adjusting and phase inverting circuit 3. The signal picker 7 can be used in a clockwise rotation mechanism or a clockwise and counterclockwise rotation mechanism, using an electro-magnetic switch, an photo diode or a photo transistor.

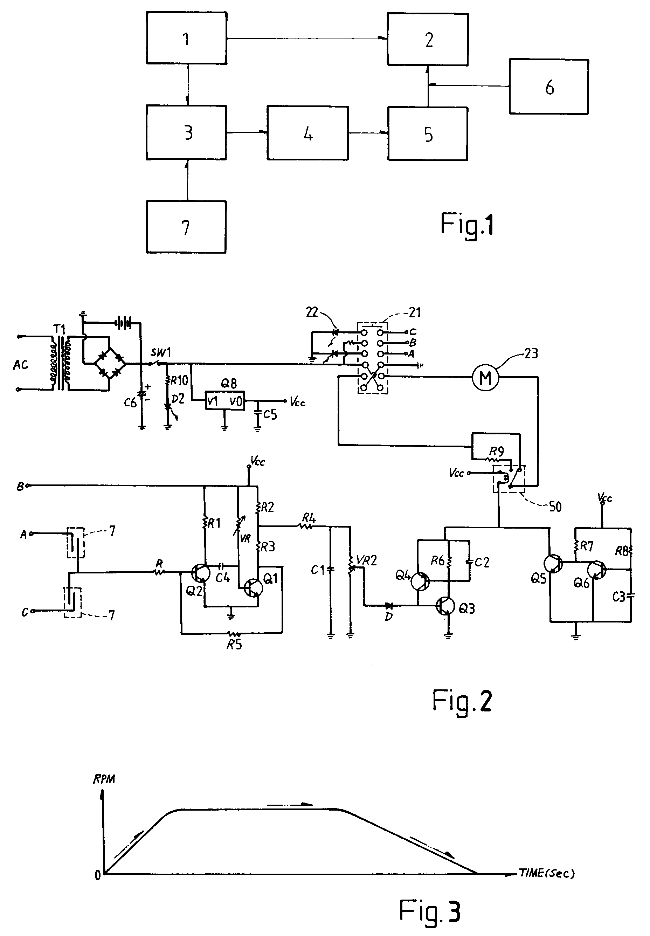

Now, the action of this controller is to be described referring to Figure 2. When the power supply circuit 1 is powered, the starting slow speed control circuit 6 is to be turned on by a start command actuating transistors Q5, Q6 turned on also to change the contact point of the relay 50 so that the current to the motor may flow through the resistor 9, reduced in its value and sent to the motor 23, which then slows down in rotation. While the slow speed controller circuit 6 has a resistor 8 and a capacitor C3 to make up a pre-set period of time for the current to be fed to the transistors Q5, Q6, the relay 50 allows the reduced current to be fed to the motor 23 to rotate for the pre-set period of time so that tape may be wound at the slow speed for the pre-set period of time.

After the pre-set period of time limited by the resistor R8 and the capacitor C3 has passed, the transistors Q5, Q6 are at once turned off, changing the contact point of the relay 50 to the original location such that the current to the motor 23 no longer flows through the resistor R9 recovering the big current to the motor 23 which then rotates very fast and thus winding the tape very fast.

The signal picker 7 incessantly detects the wound length of the tape on the winding wheel not driven by the motor 23, sending signals all the time according to what is detected to the pulse adjusting and phase inverting circuit 3, wherein an oscillator consisting of transistors Q1, Q2, a resistor R1, a capacitor C4 and a resistor R5 for feedback to produce oscillation to feed to resistors R3, R2. Then the signal of low voltage will be inverted in its phase and become a signal of high voltage at the point between the resistor R3 and the resistor R2. Then, this signal of high voltage is fed to and changed by the voltage changer 4 consisting of a resistor R4 and a capacitor C1, and then sent to a variable resistor VR2. If this input signal coincides with the pre-set value of the resistor VR2, the SCR-style control circuit 5 is to be actuated by the signal, turning on transistors Q3, Q4, which function to change the contact point of the relay 50 to slow down the speed of the motor 23 until it stops as described above.

At the start of winding process, the motor 23 rotates at a slow speed for the pre-set period of time, and then rotates at a fast speed until the detected signal coincides with the pre-set value, which then actuates the related circuits to turn on, slowing down the motor until it stops. Thus, a tape of any length can be wound with three stages of winding speed, i.e. a slow speed at the start, a very fast speed in the middle and a slow speed just before finishing winding by automatic detecting process.

**Claims**

1. A three-stage tape winding speed controller being capable to automatically change the speed of a motor in three-stages driving one winding wheel of the two winding wheels in a cassette tape recorder, a video cassette recorder or a video tape rewinder by means of an electrical signal, gotten by detecting the proportion of the tape length wound on the two winding wheels, compared with a pre-set signal value or an adjusted signal value, said detected signal value being capable to start this controller to change the motor speed when said detected signal value coincides with the pre-set or adjusted signal value.

2. The three-stage tape winding speed controller as claimed in Claim 1, wherein the motor driving the winding wheel is supplied with electric power of low voltage or low current so that the motor rotates with a slow speed for a pre-set period of time at the start in winding a tape, and then electric power of high current or voltage is automatically supplied to the motor to wind the tape with a very fast speed and then low current or voltage is again supplied automatically to the motor so as to slow it down just before finishing winding the tape by means of a signal, gotten from detecting the wound length of the tape on one winding wheel or the proportion of the lengths of the tape wound on the two winding wheels, coinciding with the pre-set signal value, until the motor is stopped.

3. The three-stage tape winding speed controller as claimed in Claim 1, wherein the signal for changing the speed of the motor is gotten from detecting the wound length of the tape on the winding wheel not driven by the motor, or the proportion of the wound lengths of the tape on the two winding wheels or any rotating mechanism causing the wound length of the tape to be changed.

4. The three-stage tape winding speed controller as claimed in Claim 1, wherein the signal detection is performed based on the wound length of the tape on one winding wheel or the proportion of the wound lengths of the tape on the two winding wheels if this controller is applied in a one-way winding mechanism, and the signal detection is performed based on the wound length of the tape on the designated winding wheel during the clockwise winding, on the other winding wheel during the counterclockwise winding or the proportion of the wound lengths of the tape on the two winding wheels during the clockwise or the counterclockwise winding if this controller is applied in a clockwise and counterclockwise winding mechanism.

5. The three-stage tape winding speed controller as claimed in Claim 1, comprising;

a power supply circuit supplying this controller with direct current;

a starting slow speed control circuit being actuated by a command to change the contact point of a relay so as to let the current to a motor driving the winding wheel to flow through and be reduced by a resistor for a pre-set period of time so that the motor can rotate at a slow speed to drive one of the two winding wheel at the start to wind a tape and recover the ordinary fast speed after the pre-set period of time;

a signal picker using an electro-magnetic switch, a photo transistor or a photo diode to pick up a ON or OFF command to detect the wound length of a tape on a winding wheel and to send a signal to actuate the pulse adjusting and phase inverting circuit, which produces an oscillated pulse to be added to the signal received and then to be inverted of its phase to become a high voltage output to be fed to a voltage changer;

a voltage changer receiving and changing the high voltage output from the pulse adjusting and phase inverting circuit to trigger a slow speed during-fast-speed-rotation circuit in an SCR-style control circuit so as to change the contact point of the relay to let the current to the motor driving one of the two winding wheels to flow through and to be reduced from a high voltage to a low one by the resistor such that the winding speed of the tape can be slowed down till the motor is stopped.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2079490 (NIPPON VICTOR)<br>* page 1, line 84 - page 2, line 19; claims ; figures * | 1-3 | G11B15/18<br>G11B15/48 |
| X | US-A-4478376 (MASAAKI SAKAGUCHI)<br>* column 2, line 48 - column 3, line 17; claims ; figures * | 1-3 | |
| A | US-A-4393422 (NOBUYOSHI YOKOBORI)<br>* column 2, line 38 - column 4, line 6; claims ; figures * | 1-3 | |
| A | GB-A-2136600 (SONY)<br>* page 1, lines 5 - 34; claims ; figures * | 1 | |
| A | DE-A-2461717 (BRAUN)<br>* the whole document * | 1, 5 | |
| | | | TECHNICAL FIELDS SEARCHED (Int. Cl.5 )<br><br>G11B |

The present search report has been drawn up for all claims

| Place of search | Date of completion of the search | Examiner |
|---|---|---|
| THE HAGUE | 12 SEPTEMBER 1991 | SCHWANDER |